# EUROPEAN PATENT SPECIFICATION

(11) **EP 3 062 137 B1**
(45) Date of publication and mention of the grant of the patent: **07.06.2023**
(21) Application number: 16156891.0
(22) Date of filing: 23.02.2016
(51) Int. Cl.: G02B 6/44

(54) **METHOD OF CONNECTING AN OPTICAL FIBER CABLE TO A CLOSURE BOX, AND A CONNECTOR AND ASSEMBLY THEREFORE**
VERFAHREN ZUM VERBINDEN EINES FASEROPTISCHEN KABELS AN EINEM VERSCHLUSSKASTEN, SOWIE VERBINDER UND ANORDNUNG DAFÜR
PROCÉDÉ DE CONNEXION D'UN CÂBLE DE FIBRE OPTIQUE À UN BOÎTIER DE FERMETURE, CONNECTEUR ET ENSEMBLE À CET EFFET

(30) Priority: 24.02.2015 NL 2014340
(43) Date of publication of application: 31.08.2016
(73) Proprietor: Prysmian S.p.A., 20126 Milan (IT)
(72) Inventor: Doorn, Mijndert, 2627 AN DELFT (NL); Zeng, Jianming, 2627 AN DELFT (NL); van Trigt, Kees, 2627 AN DELFT (NL)
(74) Representative: V.O.

(56) References cited:
- EP-A1- 2 273 295
- EP-A2- 0 197 546
- WO-A1-2007/033408
- US-A- 4 864 080
- US-A1- 2010 046 904

## Description

### Field of the invention

The present invention is directed at a method of connecting an optical fiber cable to a closure box, wherein the optical fiber cable comprises a rigid cable sheath of a first stiffness enclosing one or more fibers, the method comprising: reserving an excess cable length of the optical fiber cable for installation of the closure box, introducing at least one of the one or more fibers in the closure box, and connecting the optical fiber cable to the closure box. The invention is further directed at a connector and an assembly for use in such a method, as well as to use of such a connector and/or assembly.

### Background

In optical communications networks, in particular in fiber-to-the-home solutions, the splicing of fibers in closure boxes and storage of such closure boxes underground is to be performed frequently. Wherever streets or whole city parts are to be connected to a fiber optic access network, such splicing is usually to be performed at several locations in a street and at many locations in the whole area. As will be appreciated, the underground space is limited, especially in urban areas, and fiber optic networks have to compete for the available space with electric networks, water distribution networks, sewers, gas distribution networks, and all kinds of other underground facilities.

To splice a fiber optic cable the cable is connected to a fiber optic splice closure box. After splicing the cable the closure box is stored in a cable trench (direct buried application). To make the splice in the cable, excess cable length is reserved on the cable which is necessary to perform the splicing process. The excess length is for example used to enable making the splice in a clean environment (e.g. inside a van) free from any dirt, rain or other pollution that may be detrimental to the splice. Excess length is also necessary to be able to make repairs or extensions to the original splice.

The cable, however, may for some applications consist of a stiff and inflexible sheath enclosing and protecting the fibers and fiber modules of the cable. The sheath reduces any external pressure conveyed to the fibers. The stiff and inflexible sheath thereby protects the fibers inside. Storing the excess length of the cable in such cases may be difficult, because it cannot be stored easily in a limited space. The width of the cable trench is limited (e.g. typically 30 cm), and making the trench wider is usually not allowed or not possible, and most of the time is not even desired to prevent future accidental damage as a result of other works to be performed underground. For the same reason, making the trench deeper is neither an available option. US 2010/046904 A1 discloses an adapter for sleeves with elastomer cable seals, comprising at least one tubular element and a support element, the support element comprising means for fastening the support element to a lower housing part of a sleeve and to a method for introducing a fiber-optic cable into a sleeve using an adapter.

### Summary of the invention

It is an object of the present invention to provide a method and arrangement for connecting an inflexible optical fiber cable to a closure box wherein the abovementioned problems have been overcome, allowing proper storage of excess length of the optical fiber cable in the available space.

To this end, reference is made to the invention as defined in the claims. There is provided herewith a method of connecting an optical fiber cable to a closure box, wherein the optical fiber cable comprises a rigid cable sheath of a first stiffness enclosing one or more fibers, the method comprising: reserving an excess cable length of the optical fiber cable for installation of the closure box, introducing at least one of the one or more fibers in the closure box, and connecting the optical fiber cable to the closure box; wherein the steps of introducing and connecting comprise: removing the rigid cable sheath from the optical fiber cable across said excess cable length; introducing the one or more fibers exposed by removal of the rigid cable sheath in a flexible duct of a second stiffness, the second stiffness being smaller than the first stiffness; fixing the optical fiber cable to the flexible duct by means of a first connector, and fixing the flexible duct to a gland of the closure box by means of a second connector.

Throughout the present description, both the terms 'fiber' and 'fiber module' have been used. Usually, the protection element will be used in combination with a fiber module.

This however should not be interpreted as being limiting on the invention, because it can be likewise applied with only a single fiber where this is may be desired.

The wording 'one or more fibers' or 'at least one fiber'
herein must be interpreted as to include both possibilities, a fiber module or a fiber. In accordance with embodiments of the invention, the at least one fiber is at least one of a group comprising: one or more individual fibers, a fiber module comprising one or more fibers, and a plurality of fiber modules.

The present invention is based on the insight that replacing the sheath of the optical fiber cable at the excess length of the cable by a flexible duct, is acceptable because of it's proximity to the closure box. The closure box itself is usually to be protected from external forces or pressure, to prevent damage. As a result, near the closure box the requirements on the stiffness of the cable sheath are more resilient. This resiliency is used in the present invention to replace the relatively stiff protective cable sheath by a flexible duct. Therefore, following the method of the present invention allows storage of the excess cable length by storing the flexible duct, which can be easily done within the available space in a cable trench.

In accordance with an embodiment, the excess cable length the flexible duct is stored inside a cable cage or cable container. The cable cage thereby providing the additional protection in proximity to the closure box. Preferably, the closure box and the excess cable length are stored within the same cable cage.

In accordance with the invention, in order to allow bending or rolling of the flexible duct without exerting pressure or risking damage to the fibers, the flexible duct is a corrugated duct and is fixed to the respective optical fiber cable and the closure box in such a manner that axial rotation (i.e. rotation around the axis) is allowed. For example, in some embodiments, the first connector is arranged for enabling said fixing of the cable to the duct such as to allow axial rotation of the duct relative to the cable. Moreover, in some embodiments the second connector is arranged for enabling said fixing of the duct to the gland such as to allow axial rotation of the duct relative to the gland. In particular during the splicing of the fibers and connection of the cable to the closure box, torsion may be exerted on the flexible duct when the duct is rolled-up and stored in a limited
space. Such torsion works against any movement of the flexible duct necessary to store the duct in a compact manner. Using the abovementioned embodiments allows to release the stress from the flexible duct during storing thereof and prevents damage.

In a preferred embodiment, the flexible duct is a corrugated duct comprising a plurality of alternatingly arranged first and second duct sections of a first and second diameter respectively, the first diameter being smaller than the second diameter, and wherein at least one of the first and second connector comprises a duct connector part having an inner diameter of at least the second diameter, an inner surface of the duct connector part comprising at least one sealing ring having an inner ring diameter being larger than or equal to the first diameter and smaller than the second diameter. The ring section in this embodiment cooperates with the duct sections of the smaller first diameter. After the duct is fixed to the duct connector part of the respective connector, the ring section is kept in place by the two adjacent duct sections of the second diameter. Because the alternating duct sections of first and second diameter are also ring shaped, this provides an axially rotatable connection between the flexible duct and the respective duct connector part.

A further preferred embodiment is in particular advantageous in combination with the above embodiment including the at least one ring section (although not exclusively limited thereto). In this embodiment, at least one of the first and second connector comprises a duct connector part, the duct connector part comprising a fixed section and a flap section, the flap section being hinged to the fixed section, wherein said at least one first and second connector is fixed to the duct by introducing the duct in the fixed section and closing and locking the flap section relative to the fixed section. In particular in combination with the preceding embodiment including the ring section, a part of the ring section could be arranged on the flap section to enable fast installation of the connector to the flexible duct by opening the flap section, installing the duct, and closing and locking the flap section to the fixed section (such that the ring section closes). As may be appreciated, this embodiment is not exclusively advantageous in combination with the embodiment including the ring section. The application of a fixed section with hinged flap section may be applied to provide a connector allowing fast installation in a different manner, e.g. by means of a clamping mechanism, a locking mechanism or another type of connection. Preferably, the hinged connection is formed by a flexible material hinge. This allows the flap section and fixed section, or even the whole connector, to be fabricated as an integral element of a same material.

A second aspect of the invention relates to a connector in accordance with any of claims 6 or 7. In accordance therewith, there is provided a connector for connecting a rigid optical fiber cable to a flexible duct for use in a method according to the first aspect, wherein connector is arranged for receiving said flexible duct being a corrugated duct comprising a plurality of alternatingly arranged first and second duct sections of a first and second diameter respectively, the first diameter being smaller than the second diameter, and wherein the connector comprises: a duct connector part enabling fixing of the connector to the flexible duct, and a further connector part; and wherein the duct connector part comprises an inner diameter of at least the second diameter, an inner surface of the duct connector part comprising at least one sealing ring having an inner ring diameter being larger than or equal to the first diameter and smaller than the second diameter, wherein the duct connector part comprises a fixed section and a flap section, the flap section being hinged relative to the fixed section, wherein a first part of the sealing ring is arranged on the flap section and at least a second part of the sealing ring is arranged on the fixed section. Advantages and effects of the application of a connector as defined herewith have been described hereinbefore.

In accordance with an embodiment, the fixed section and the flap section comprise mutually corresponding locking means for locking the flap section to the fixed section in a closed position of the flap section. This allows the flap section to be easily closed and locked in position, for fixing the duct in a fast and efficient manner during installation. Moreover, in some embodiments, the flap section is connected in a hinged manner to the fixed section by means of at least one flexible material hinge. The connector may even, as in some embodiments, be formed as an integral element formed of a same material. Providing the connector as a single piece without any separate or loose parts, makes installation very easy for an installation engineer and prevents loss of essential parts of the connector during installation.

Because the method of the first aspect of the present invention requires first connectors to fix the flexible duct to the optical fiber cable, and second connectors to fix the flexible duct to the cable connection gland of the closure box, the following two embodiments of the connector of the present invention are advantageous. In accordance with the first of these embodiments, the further connector part comprises a cable connector part for receiving a cable sheath of the optical fiber cable and for fixing the connector to the cable. This first embodiment provides for a cable-to-duct connector. In accordance with the second of these embodiments, the further connector part comprises a gland connector part for enabling fixing of the connector to a cable connector gland of a closure box. This second embodiment provides for a duct-to-gland connector for fixing the flexible duct to the cable connection gland of a closure box.

In some particular embodiments in accordance with the abovementioned second embodiment, the gland connector part comprises a funnel shaped receiving portion for receiving a correspondingly shaped gland portion of the cable connector gland, the receiving portion being shaped such as to be interposed in use between said gland portion and a further gland portion, wherein the funnel shaped receiving portion further comprises an inner surface and one or more radial fixation teeth extending from the inner surface, the one or more radial fixation teeth corresponding with one or more notches or slots on the gland portion such as to prevent axial rotation between the connector and the gland in use. The radial fixation teeth cause the duct-to-gland connector to be fixed relative to the gland, such as that axial rotation of the connector relative to the gland is prevented. At the same time, the flexible duct is allowed to rotate axially relative to the connector. Fixation of the connector relative to the gland prevents loosening of the connection with the gland due to undesired movement of the connector that is interposed between different parts of the gland (e.g. different fittings of a gland that may be fixed to each other by means of screwing or clamping).

In accordance with a third aspect, the invention provides an assembly comprising a flexible duct, a first connector and a second connector, wherein the flexible duct is a corrugated duct comprising a plurality of alternatingly arranged first and second duct sections of a first and second diameter respectively, the first diameter being smaller than the second diameter, wherein the first connector includes a cable-to-duct connector - i.e. in accordance with the abovementioned embodiment of the second aspect, and wherein the second connector includes a duct-to-gland connector - i.e. in accordance with the abovementioned embodiment of the second aspect, the flexible duct being fixed with a first end thereof to the first connector and with the second end thereof to the second connector.

Yet in accordance with a fourth aspect, the invention is directed at a use of a connector according to the second aspect or an assembly according to the third aspect in a method of connecting an optical fiber cable to a closure box. Such a method may for example be a method in accordance with the first aspect, or another method of connecting an optical fiber cable to a closure box.

### Brief description of the drawings

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:
Figure 1 schematically illustrates the splicing of fibers in a fiber-to-the-home access network;
Figure 2 schematically illustrates a method in accordance with the present invention;
Figure 3 schematically illustrates a cable connected to a closure box in accordance with a method of the present invention, including an assembly of the present invention;
Figure 4 schematically illustrates an optical fiber cable;
Figure 5 illustrates a connection between a cable and a flexible duct by means of a cable-to-duct connector;
Figure 6 illustrates a cable-to-duct connector in accordance with an embodiment;
Figure 7 illustrates a duct-to-gland connector in accordance with an embodiment;
Figure 8 provides an alternative view of the duct-to-gland connector of Figure 7;
Figures 9A and 9B respectively illustrate an exploded view and a perspective view of a flexible duct connected to a gland using a duct-to-gland connector in accordance with an embodiment.

### Detailed description

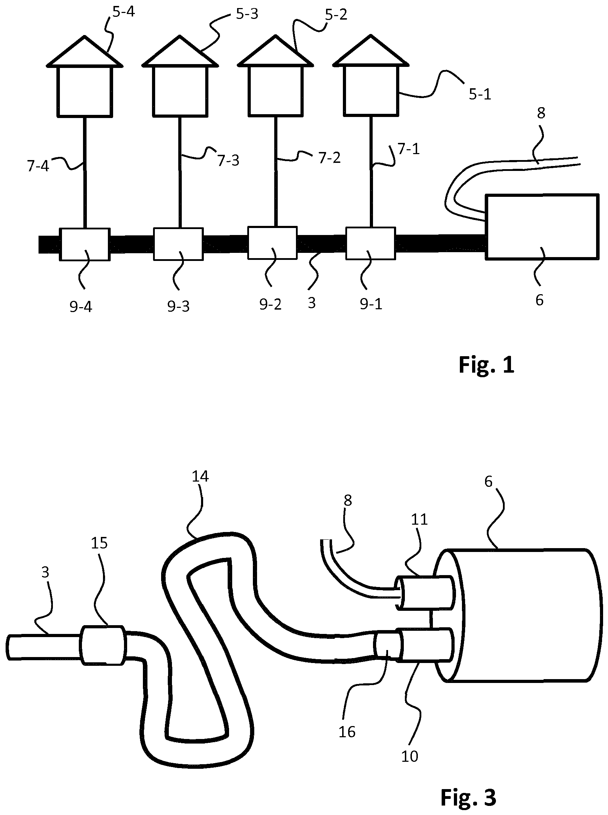

Figure 1 schematically illustrates a fiber-to-the-home (FTTH) access network. Herein, a cable 3 with retractable fiber modules 7-1, 7-2, 7-3, and 7-4, connects each of the houses 5-1, 5-2, 5-3 and 5-4 to an metropolitan area network (MAN). The fiber modules 7-1, 7-2, 7-3, and 7-4, are pulled out of the cable 3 at the location of the tapping boxes 9-1, 9-2, 9-3 and 9-4 respectively and routed to the customer's premises. The cable 3 is connected to a closure box 6, from where a further optical fiber cable 8 extends to a point of presence of the metropolitan area network. In the closure box 6, the optical fibers of the plurality fiber modules 7-1 to 7-4 of cable 3 are spliced to individual fibers of the cable 8.

Closures housing splices such as schematically illustrated in figure 1 are present in many locations of an optical communication network, to connect the fibers of the optical fiber network to all sorts of entities. Many times, the closure boxes 6 are stored underground such as to be not visible to the users of the network. Preferably, the closure boxes 6 are stored within the cable trench available for installation of the optical fiber cable 3. The splicing locations of the individual fibers 7-1 to 7-4 are safely stored inside the closure box 6, free from dirt and pollution. However, during installation of the FTTH network, the splicings must be made in a clean environment to guarantee proper functionality of the network. Moreover, to prevent having to replace the complete cable 3 in case the closure box 6 may accidentally become damaged, upon connecting the cable 3 to the closure box 6, a certain amount of excess cable length is reserved. The excess cable length allows to create the splicing of the individual fibers 7-1 to 7-4 in a clean environment (for example inside the van of the installation engineer), while at the same time providing the required additional length that can be used in case the closure box 6 or any of the splicings may accidentally be lost throughout the lifetime of the optical fiber network.

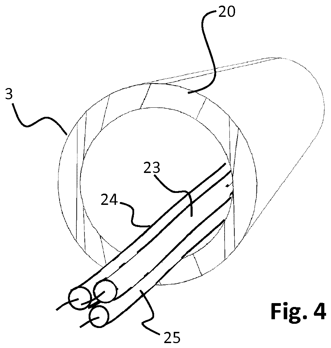

In some particular applications, the optical fiber cable 3 comprises an inflexible stiff sheath which protects the fibers and/or fiber modules inside the cable 3. An example of such a stiff inflexible cable 3 including a plurality of fiber modules 23, 24, 25 is illustrated in figure 4. The optical fiber cable 3 comprises a inflexible stiff cable sheath 20 wherein the fiber modules 23-25 are arranged. A force or pressure exerted on the optical fiber cable 3 will not harm the optical fiber modules 23, 24 and 25 because they are protected by the cable sheath 20.

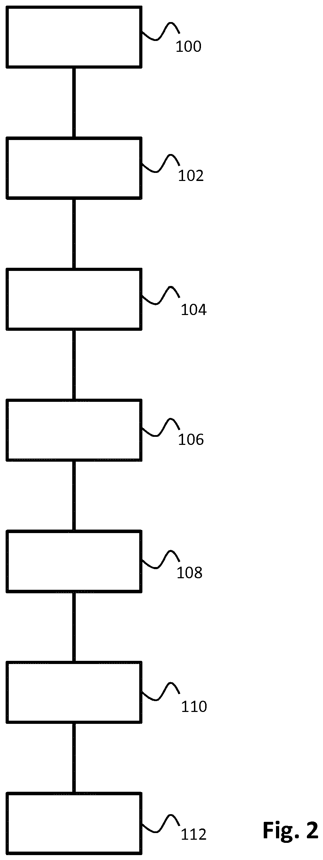

As may be appreciated the cable 3 being an inflexible cable having a high stiffness, it is difficult to store the excess length thereof in a compact manner underground. Therefore, in accordance with the method of the present invention, the method of connecting the optical fiber cable 3 to the closure box 6 may be performed as is illustrated in figure 2. In accordance with this method, a desired amount of excess length is reserved on the fiber optic cable 3. The excess length is selected such that it is sufficient for allowing the splicing of the individual fibers to be made in a clean environment for example. The reservation of the excess length on the fiber optic cable 3 is performed in step 100. Then, across the reserved excess length of the fiber optic cable 3, the protective cable sheath 20 is removed in full in step 102. This yields the individual fiber modules 7-1 to 7-4 that are inside the optical cable 3 to be exposed.

In step 104, a first connector, being the cable-to-duct connector of the present invention, is installed at the end of the remaining cable sheath 20 on the cable 3. The first connector is fixed, e.g. by means of a clamp, to the cable 3. Next, in step 106, the exposed fibers are introduced into a flexible duct 14 having a length slightly shorter than the excess length (the remaining excess length will be in the closure box 6). The flexible duct 14 is of a much lower stiffness, and may easily be rolled up or stored in a small space. Next, in step 108, at the end of the flexible duct 14 a second connector in accordance with the present invention, being the duct-to-gland connector, is installed for installation of the connector to the gland 10 of the closure box 6. Dependent on the type of gland of the closure box, a screwable fitting of the gland 10 may be fixed to a corresponding further fitting to fix the flexible duct 14 to the cover of the closure box 6. The individual fibers are then ready to be spliced and the spliced fibers are stored inside the closure box 6.

In step 110, each individual fiber or fiber modules are spliced and the closure box 6 is closed. Then, in step 112, the closure box is safely stored in the storage area, which may for example be a cable trench. Many times, storage of the closure box 6 and the flexible duct 14 will be done inside an underground container or cable cage. Storage of the closure box and flexible duct in the cable cage protect these elements from external forces exerted in the area thereof.

A typical assembly that is provided using the method of the present invention is schematically illustrated in figure 3. Figure 3 illustrates the inflexible fiber optic cable 3, the cable to duct connector 15, the flexible duct 14, the duct-to-gland connector 16 and the gland 10 of the closure box 6. A further gland 11 of the closure box releases the cable 8 to be connected for example to the metropolitan area network.

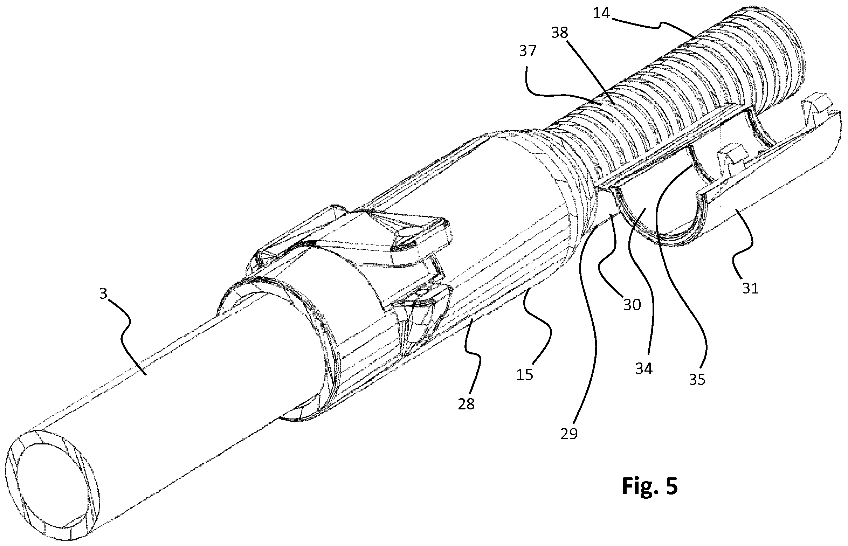

A cable-to-duct connector 15 in accordance with the present invention is illustrated in figure 5. Figure 5 illustrates the inflexible optical fiber cable 3 which is introduced in a cable connection part 28 of the connector 15. A second part of the connector 15 provides for the duct connector part 29 thereof. From the duct connector part, the flexible duct 14 extends from the connector 15. The duct connector part 29 consists of a fixed section 30 and a flap section 31. The flap section 31 is connected via a hinged connection with the fixed section 30. The inner surface 34 of the duct connector part 29 of the connector 15 comprises a sealing ring 35. The sealing ring 35 extends around the circumference of the duct 14 of the inner surface of both the flap section 31 as well as the fixed section 30. The flexible duct 14 is a corrugated duct consisting of an alternating arrangement of duct sections of a first diameter 38 and a second diameter 37 respectively, the first diameter 38 being smaller than the second diameter of duct section 37. The sealing ring 35 cooperates with a corresponding duct section 38 of a first diameter, and when the flap section 31 is closed with respect to the fixed section 30, the sealing ring 35 holds the flexible duct 14 in place in the connector 15 by being interposed between the duct sections 37 of the second diameter.

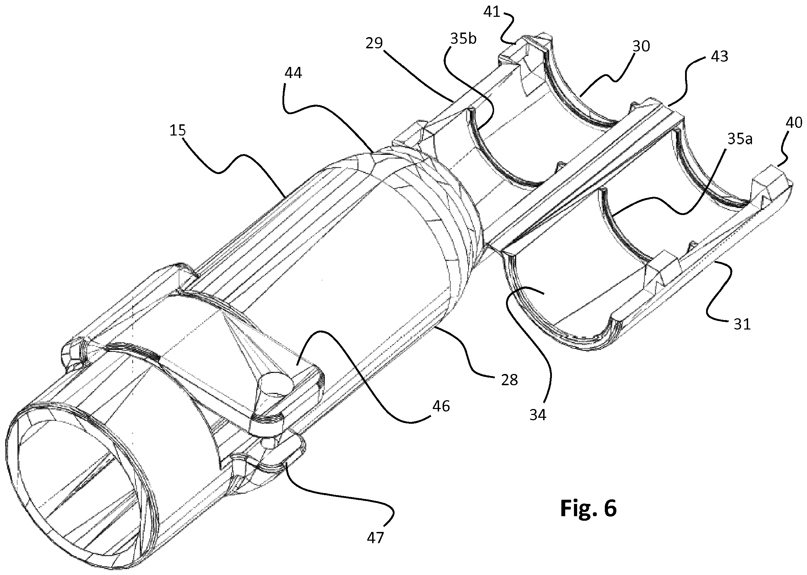

A further illustration of the connector 15, without the cable 3 and the flexible duct 14, is illustrated in figure 6. Here, it can be seen that the sealing ring 35 consists of a first ring section 35a on the inner surface 34 of the flap section 31, and a corresponding second ring section 35b on the inside of the fixed section 30. Moreover, in the illustration of figures 5 and 6, it is visible that the connector 15 comprises two of these sealing rings (only one sealing ring has received a reference numeral 35). The number of sealing rings 35 may be chosen freely by the skilled person. From figure 6, the flexible material hinge 43 is visible which connects the flap section 31 to the fixed section 30. Moreover, the flap section 31 comprises locking means 40 that correspond to corresponding locking means 41 on the fixed section, allowing fast closure and locking of the flap section 31 relative to the fixed section 30. The connector 15 further comprises a tapered section 44 extending the duct connector part 29 towards the cable connection part 28 of the connector 15. The cable connection part 28 comprises clamping means 46, 47 allowing the fixing of the inflexible cable 3 to the cable connection part 28.

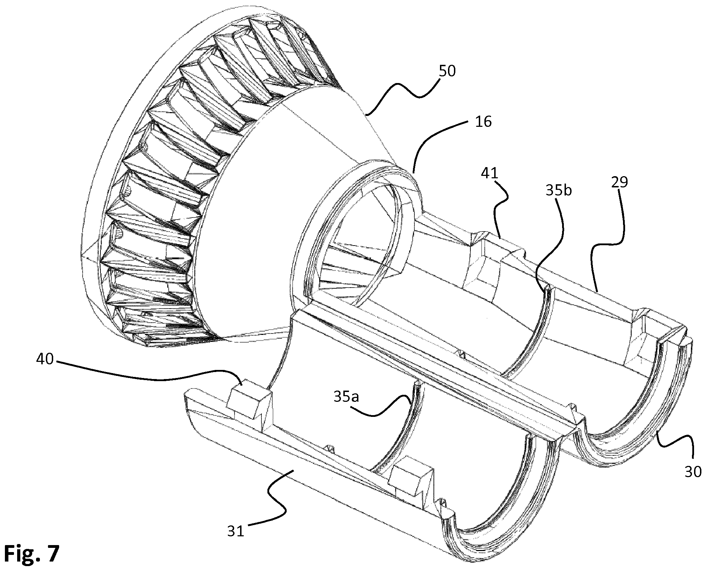

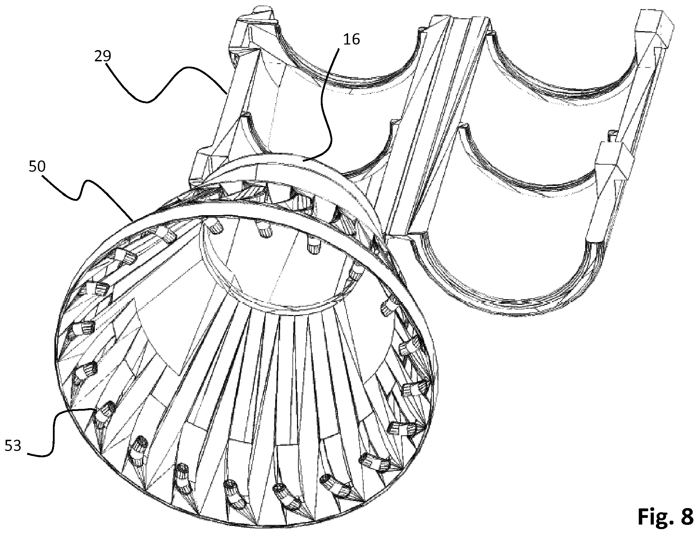

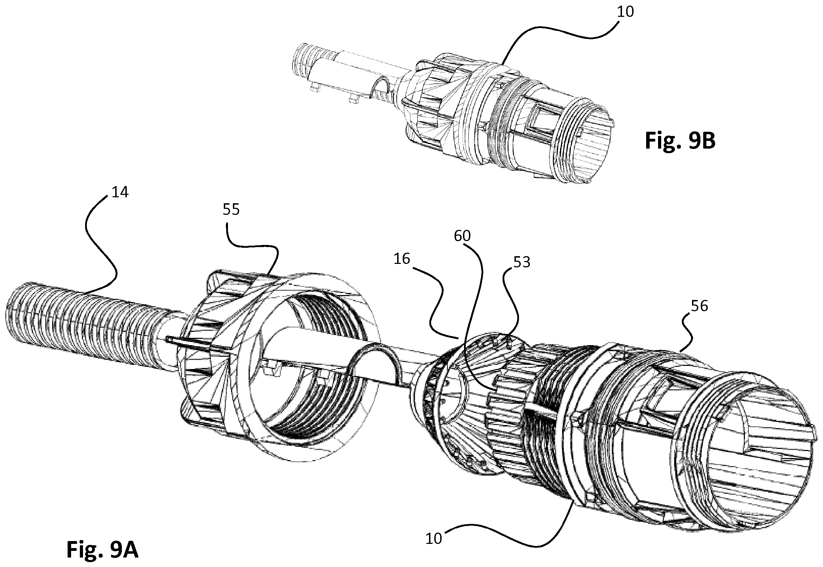

Further illustrated in figure 7 is a duct-to-gland connector 16 in accordance with the present invention. The duct-to-gland connector 16 also comprises a duct connector part 29 similar to the duct connector part 29 of connector 15. The similar features of the duct connector part 29 have been indicated with same reference numerals in figure 7. The second side of the connector 16 comprises gland connector part 50. The gland connector part 50 is funnel shaped such as to fit to the particular gland of the closure box 6 used. A further view of the duct-to-gland connector 16 is illustrated in figure 8. As is visible in figure 8, on the inside of the funnel shaped gland connector part 50, a plurality of teeth 53 extends from its inner surface towards the inside. The function of these teeth 53 is illustrated in figure 9A.

Figure 9A is an exploded view of the connection of a duct 14 to a gland 10 of a closure box 6. The gland 10 comprises a first fitting 56 attached to the cover of the closure box (not shown) and a second fitting 55. The second fitting 55 on the inside comprises a screw thread corresponding with a similar thread on the outside of fitting 56. For connecting the duct 14, the end of the duct 14 is first introduced in the fitting 55 and then into the duct connector part 29 of the duct-to-gland connector 16. Then, the flap section 31 of the duct connector part 29 of the connector 16 is closed to secure the duct to the connector 16. As a result of the sealing rings 35 cooperating with the duct sections of the first diameter, the duct 14 is fixed in such a manner that axial rotation of the duct 14 relative to the connector 16 is possible. Moreover, the sealing rings 35 prevent any dirt from entering the flexible duct or the gland.

The teeth 53 on the gland connector part 50 of the connector 16 cooperate with a plurality of slots 60 on the outer rim of the fitting 56 of the gland 10. As a result, axial rotation of the connector 16 relative to the gland fitting 56 is no longer possible after the connection is made. The connection is made by screwing the fitting 55 onto the fitting 56 of the gland 10. This yields the connection as illustrated in figure 9B.

The present invention has been described in terms of some specific embodiments thereof. It will be appreciated that the embodiments shown in the drawings and described herein are intended for illustrated purposes only and are not by any manner or means intended to be restrictive on the invention. It is believed that the operation and construction of the present invention will be apparent from the foregoing description and drawings appended thereto. It will be clear to the skilled person that the invention is not limited to any embodiment herein described and that modifications are possible which should be considered within the scope of the appended claims. Also kinematic inversions are considered inherently disclosed and to be within the scope of the invention. In the claims, any reference signs shall not be construed as limiting the claim. The term 'comprising' and 'including' when used in this description or the appended claims should not be construed in an exclusive or exhaustive sense but rather in an inclusive sense. Thus the expression 'comprising' as used herein does not exclude the presence of other elements or steps in addition to those listed in any claim. Furthermore, the words 'a' and 'an' shall not be construed as limited to 'only one', but instead are used to mean 'at least one', and do not exclude a plurality. Features that are not specifically or explicitly described or claimed may be additionally included in the structure of the invention within its scope. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. The invention is defined by the appended claims.

## Claims

1. Method of connecting an optical fiber cable (3) to a closure box (6), wherein the optical fiber cable comprises a rigid cable sheath of a first stiffness enclosing one or more fibers, the method comprising:
reserving (100) an excess cable length of the optical fiber cable for installation of the closure box, introducing at least one of the one or more fibers in the closure box (6), and connecting the optical fiber cable to the closure box;
wherein the steps of introducing and connecting comprise:
removing (102) the rigid cable sheath from the optical fiber cable across said excess cable length;
introducing (106) the one or more fibers exposed by removal of the rigid cable sheath in a flexible duct (14) of a second stiffness, the second stiffness being smaller than the first stiffness;
fixing (104) the optical fiber cable to the flexible duct by means of a first connector (15), and fixing (108) the flexible duct to a gland of the closure box (6) by means of a second connector (16);
**characterized in that** in accordance with the method the first connector (15) enables said fixing of the cable (3) to the duct (14), wherein the duct is a corrugated duct, such as to allow axial rotation of the duct relative to the cable.

2. Method according to claim 1, wherein the second connector (16) is arranged for enabling said fixing of the duct (14) to the gland (10) such as to allow axial rotation of the duct relative to the gland.

3. Method according to any of the previous claims, wherein the flexible duct (14) is a corrugated duct comprising a plurality of alternatingly arranged first and second duct sections of a first and second diameter respectively, the first diameter being smaller than the second diameter, and wherein at least one of the first and second connector comprises a duct connector part (29) having an inner diameter of at least the second diameter, an inner surface of the duct connector part comprising at least one sealing ring (35) having an inner ring diameter being larger than or equal to the first diameter and smaller than the second diameter.

4. Method according to any of the previous claims, wherein at least one of the first and second connector (15, 16) comprises a duct connector part (29), the duct connector part comprising a fixed section (30) and a flap section (31), the flap section being hinged to the fixed section, wherein said at least one first and second connector is fixed to the duct (14) by introducing the duct in the fixed section and closing and locking the flap section relative to the fixed section.

5. Method according to any of the preceding claims, wherein the excess cable length is stored in a cable cage.

6. Connector for fixing a flexible corrugated duct to an optical fiber cable, the connector being arranged to receive the flexible corrugated duct (14), the corrugated duct comprising a plurality of alternatingly arranged first and second duct sections of a first and second diameter respectively, the first diameter being smaller than the second diameter, and wherein the connector comprises:
a duct connector part (29) enabling fixing of the connector to the flexible duct, and a further connector part (28, 50);
wherein the connector is suitable for connecting a rigid optical fiber cable to a flexible duct or for connecting a flexible duct to a gland of a closure box, for use in a method according to any of the claims 1-5,
wherein the further connector part comprises:
a cable connector part (28) for receiving a cable sheath of the optical fiber cable and comprising clamping means (46, 47) for fixing the connector to the cable,
wherein the duct connector part (29) comprises an inner diameter of at least the second diameter, an inner surface of the duct connector part comprising at least one sealing ring (35) having an inner ring diameter being larger than or equal to the first diameter and smaller than the second diameter for enabling axial rotation of the duct relative to the connector, wherein the duct connector part (29) comprises a fixed section and a flap section, the flap section being hinged relative to the fixed section, wherein a first part of the sealing ring is arranged on the flap section and at least a second part of the sealing ring (35) is arranged on the fixed section.

7. Connector for fixing a flexible corrugated duct to the cable connection gland of a closure box, the connector being arranged to receive the flexible corrugated duct (14), the corrugated duct (14) being a corrugated duct comprising a plurality of alternatingly arranged first and second duct sections of a first and second diameter respectively, the first diameter being smaller than the second diameter, and wherein the connector comprises:
a duct connector part (29) enabling fixing of the connector to the flexible duct, and a further connector part (28, 50);
wherein the connector is suitable for connecting a rigid optical fiber cable to a flexible duct or for connecting a flexible duct to a gland of a closure box, for use in a method according to any of the claims 1-5,
wherein the further connector part comprises:
a gland connector part (50) for enabling fixing of the connector to a cable connector gland of a closure box, wherein the gland connector part (50) comprises a funnel-shaped receiving portion for receiving a correspondingly shaped gland portion of the cable connector gland, the funnel-shaped receiving portion being shaped such as to be interposed in use between said gland portion and a further gland portion, wherein the funnel-shaped receiving portion further comprises an inner surface and one or more radial fixation teeth (53) extending from the inner surface, the one or more radial fixation teeth corresponding with one or more notches or slots on the gland portion such as to prevent axial rotation between the connector and the gland in use; and
wherein the duct connector part (29) comprises an inner diameter of at least the second diameter, an inner surface of the duct connector part comprising at least one sealing ring (35) having an inner ring diameter being larger than or equal to the first diameter and smaller than the second diameter for enabling axial rotation of the duct relative to the connector, wherein the duct connector part (29) comprises a fixed section and a flap section, the flap section being hinged relative to the fixed section, wherein a first part of the sealing ring is arranged on the flap section and at least a second part of the sealing ring (35) is arranged on the fixed section.

8. Connector according to claim 6 or 7, wherein the fixed section (30) and the flap section (31) comprise mutually corresponding locking means for locking the flap section to the fixed section in a closed position of the flap section.

9. Connector according to any of the claims 6-8, wherein the flap section (31) is connected in a hinged manner to the fixed section (30) by means of at least one flexible material hinge.

10. Connector according to any of the claims 6-9, wherein the connector is an integral element formed of a same material.

11. Assembly comprising a flexible duct (14), a first connector (15) and a second connector (16), wherein the flexible duct is a corrugated duct comprising a plurality of alternatingly arranged first and second duct sections of a first and second diameter respectively, the first diameter being smaller than the second diameter, wherein the first connector (15) includes a connector according to any of the claims 6-8 for connecting a rigid optical fiber cable to the flexible duct (14), and wherein the second connector (16) includes a connector according to any of the claims 6-10 for connecting the flexible duct (14) to a gland, the flexible duct being fixed with a first end thereof to the first connector and with the second end thereof to the second connector.

12. Use of a connector according to any of the claims 6-10 or an assembly according to claim 11 in a method of connecting an optical fiber cable (3) to a closure box (6).

## Patentansprüche

1. Verfahren zum Verbinden eines Lichtwellenleiterkabels (3) mit einem Verschlusskasten (6), wobei das Lichtwellenleiterkabel einen starren Kabelmantel mit einer ersten Steifigkeit umfasst, der eine oder mehrere Fasern umschließt, wobei das Verfahren umfasst:
Reservieren (100) einer überschüssigen Kabellänge des Lichtwellenleiterkabels für die Installation der Verschlusskasten, Einführen wenigstens einer der einen oder mehreren Fasern in die Verschlusskasten (6) und Verbinden des Lichtwellenleiterkabels mit dem Verschlusskasten;
wobei die Schritte des Einführens und Verbindens umfassen:
Entfernen (102) des starren Kabelmantels von dem Lichtwellenleiterkabel über die überschüssige Kabellänge;
Einführen (106) der einen oder mehreren Fasern, die durch das Entfernen des starren Kabelmantels freigelegt wurden, in eine flexible Führung (14) mit einer zweiten Steifigkeit, wobei die zweite Steifigkeit kleiner als die erste Steifigkeit ist;
Befestigen (104) des Lichtwellenleiterkabels an der flexiblen Führung mittels eines ersten Verbinders (15), und Befestigen (108) der flexiblen Führung an einer Stopfbuchse des Verschlusskasten (6) mittels eines zweiten Verbinders (16);
**dadurch gekennzeichnet, dass** gemäß dem Verfahren der erste Verbinder (15) das Befestigen des Kabels (3) an der Führung (14) ermöglicht, wobei die Führung eine gewellte Führung ist, so dass eine axiale Drehung der Führung relativ zum Kabel möglich ist.

2. Verfahren nach Anspruch 1, wobei der zweite Verbinder (16) so angeordnet ist, dass es das Befestigen der Führung (14) an der Stopfbuchse (10) ermöglicht, so dass eine axiale Drehung der Führung relativ zur Stopfbuchse möglich ist.

3. Verfahren nach einem der vorhergehenden Ansprüche, wobei die flexible Führung (14) eine gewellte Führung ist, die mehrere abwechselnd angeordnete erste und zweite Führungsabschnitte mit einem ersten und zweiten Durchmesser umfasst, wobei der erste Durchmesser kleiner als der zweite Durchmesser ist, und wobei wenigstens der erste und/oder zweite Verbinder ein Führungsverbinderteil (29) mit einem Innendurchmesser von wenigstens dem zweiten Durchmesser umfasst, wobei eine Innenfläche der Führungverbinderteils wenigstens einen Dichtungsring (35) mit einem Innenringdurchmesser umfasst, der größer oder gleich dem ersten Durchmesser und kleiner als der zweite Durchmesser ist.

4. Verfahren nach einem der vorhergehenden Ansprüche, wobei wenigstens der erste und/oder zweite Verbinder (15, 16) ein Führungsverbinderteil (29) umfasst, wobei der Führungverbinder einen festen Abschnitt (30) und einen Klappenabschnitt (31) umfasst, wobei der Klappenabschnitt zu dem festen Abschnitt schwenkbar ist, wobei der wenigstens eine erste und zweite Verbinder an der Führung (14) durch Einführen der Führung in den festen Abschnitt und Schließen und Verriegeln des Klappenabschnitts relativ zu dem festen Abschnitt befestigt wird.

5. Verfahren nach einem der vorhergehenden Ansprüche, wobei die überschüssige Kabellänge in einem Kabelkäfig gelagert wird.

6. Verbinder zum Befestigen einer flexiblen gewellten Führung an einem Lichtwellenleiterkabel, wobei der Verbinder so angeordnet ist, dass er die flexible gewellte Führung (14) aufnimmt, wobei die gewellte Führung mehrere abwechselnd angeordnete erste und zweite Führungsabschnitte mit einem ersten und zweiten Durchmesser umfasst, wobei der erste Durchmesser kleiner als der zweite Durchmesser ist, und wobei der Verbinder umfasst:
ein Führungsverbinderteil (29), das das Befestigen des Verbinders an der flexiblen Führung ermöglicht, und ein weiteres Verbinderteil (28, 50);
wobei der Verbinder zum Verbinden eines starren Lichtwellenleiterkabels mit einer flexiblen Führung oder zum Verbinden einer flexiblen Führung mit einer Stopfbuchse eines Verschlusskastens geeignet ist, zur Verwendung in einem Verfahren nach einem der Ansprüche 1 bis 5,
wobei das weitere Verbinderteil umfasst:
ein Kabelverbinderteil (28) zur Aufnahme eines Kabelmantels des Lichtwellenleiterkabels und mit Klemmmitteln (46, 47) zum Befestigen des Verbinders am Kabel,
wobei das Führungsverbinderteil (29) einen Innendurchmesser von wenigstens dem zweiten Durchmesser umfasst, wobei eine Innenfläche der Führungverbinderteils wenigstens einen Dichtungsring (35) mit einem Innenringdurchmesser aufweist, der größer oder gleich dem ersten Durchmesser und kleiner als der zweite Durchmesser ist, um eine axiale Drehung der Führung relativ zu dem Verbinder zu ermöglichen, wobei das Führungverbinderteil (29) einen festen Abschnitt und einen Klappenabschnitt umfasst, wobei der Klappenabschnitt relativ zu dem festen Abschnitt schwenkbar ist, wobei ein erster Teil des Dichtungsrings an dem Klappenabschnitt angeordnet ist und wenigstens ein zweiter Teil des Dichtungsrings (35) an dem festen Abschnitt angeordnet ist.

7. Verbinder zum Befestigen einer flexiblen gewellten Führung an der Kabelanschlussstopfbuchse eines Verschlusskastens, wobei der Verbinder so angeordnet ist, dass er die flexible gewellte Führung (14) aufnimmt, wobei die gewellte Führung (14) eine gewellte Führung ist, die mehrere abwechselnd angeordnete erste und zweite Führungsabschnitte mit einem ersten und zweiten Durchmesser umfasst, wobei der erste Durchmesser kleiner ist als der zweite Durchmesser, und wobei der Verbinder umfasst:
ein Führungsverbinderteil (29), das das Befestigen des Verbinders an der flexiblen Führung ermöglicht, und ein weiteres Verbinderteil (28, 50);
wobei der Verbinder zum Verbinden eines starren Lichtwellenleiterkabels mit einer flexiblen Führung oder zum Verbinden einer flexiblen Führung mit einer Stopfbuchse eines Verschlusskastens geeignet ist, zur Verwendung in einem Verfahren nach einem der Ansprüche 1 bis 5,
wobei das weitere Verbinderteil umfasst:
ein Stopfbuchsenverbinderteil (50), um das Befestigen des Verbinders an einer Kabelverbinderstopfbuchse eines Verschlusskastens zu ermöglichen, wobei das Stopfbuchsenverbinderteil (50) einen trichterförmigen Aufnahmeabschnitt zur Aufnahme eines entsprechend geformten Stopfbuchsenabschnitts der Kabelverbinderstopfbuchse umfasst, wobei der trichterförmige Aufnahmeabschnitt so geformt ist, dass er im Gebrauch zwischen dem Stopfbuchsenabschnitt und einem weiteren Stopfbuchsenabschnitt eingesetzt wird, wobei der trichterförmige Aufnahmeabschnitt ferner eine Innenfläche und einen oder mehrere radiale Befestigungszähne (53) aufweist, die sich von der Innenfläche aus erstrecken, wobei der eine oder die mehreren radialen Befestigungszähne mit einer oder mehreren Kerben oder Schlitzen auf dem Stopfbuchsenabschnitt korrespondieren, um eine axiale Drehung zwischen dem Verbinder und der Stopfbuchse im Gebrauch zu verhindern; und
wobei das Führungsverbinderteil (29) einen Innendurchmesser von wenigstens dem zweiten Durchmesser umfasst, wobei eine Innenfläche der Führungverbinderteils wenigstens einen Dichtungsring (35) mit einem Innenringdurchmesser aufweist, der größer oder gleich dem ersten Durchmesser und kleiner als der zweite Durchmesser ist, um eine axiale Drehung der Führung relativ zu dem Verbinder zu ermöglichen, wobei das Führungverbinderteil (29) einen festen Abschnitt und einen Klappenabschnitt umfasst, wobei der Klappenabschnitt relativ zu dem festen Abschnitt schwenkbar ist, wobei ein erster Teil des Dichtungsrings an dem Klappenabschnitt angeordnet ist und wenigstens ein zweiter Teil des Dichtungsrings (35) an dem festen Abschnitt angeordnet ist.

8. Verbinder nach Anspruch 6 oder 7, wobei der feste Abschnitt (30) und der Klappenabschnitt (31) einander entsprechende Verriegelungsmittel zum Verriegeln des Klappenabschnitts mit dem festen Abschnitt in einer geschlossenen Position des Klappenabschnitts umfassen.

9. Verbinder nach einem der Ansprüche 6 bis 8, wobei der Klappenabschnitt (31) mittels wenigstens eines Scharniers aus flexiblem Material schwenkbar mit dem festen Abschnitt (30) verbunden ist.

10. Verbinder nach einem der Ansprüche 6 bis 9, wobei der Verbinder ein integrales Element ist, das aus demselben Material besteht.

11. Baugruppe, die eine flexible Führung (14), einen ersten Verbinder (15) und einen zweiten Verbinder (16) umfasst, wobei die flexible Führung eine gewellte Führung ist, die mehrere abwechselnd angeordnete erste und zweite Führungsabschnitte mit einem ersten und zweiten Durchmesser umfasst, wobei der erste Durchmesser kleiner als der zweite Durchmesser ist, wobei der erste Verbinder (15) einen Verbinder nach einem der Ansprüche 6 bis 8 zum Verbinden eines starren Lichtwellenleiterkabels mit der flexiblen Führung (14) einschließt, und wobei der zweite Verbinder (16) einen Verbinder nach einem der Ansprüche 6 bis 10 zum Verbinden der flexiblen Führung (14) mit einer Stopfbuchse einschließt, wobei die flexible Führung mit einem ersten Ende an dem ersten Verbinder und mit dem zweiten Ende an dem zweiten Verbinder befestigt ist.

12. Verwendung eines Verbinders nach einem der Ansprüche 6 bis 10 oder einer Baugruppe nach Anspruch 11 in einem Verfahren zum Verbinden eines Lichtwellenleiterkabels (3) mit einer Verschlusskasten (6).

## Revendications

1. Procédé de connexion d'un câble à fibre optique (3) à un boîtier de fermeture (6), dans lequel le câble à fibre optique comprend une gaine de câble rigide d'une première rigidité renfermant une ou plusieurs fibres, le procédé comprenant les étapes consistant à :
réserver (100) une longueur de câble en excès du câble à fibre optique pour l'installation du boîtier de fermeture,
introduire au moins l'une de la ou des fibres dans le boîtier de fermeture (6) et connecter le câble à fibre optique au boîtier de fermeture ; dans lequel les étapes d'introduction et de connexion comprennent les étapes consistant à :
retirer (102) la gaine de câble rigide du câble à fibre optique sur ladite longueur de câble en excès;
introduire (106) la ou les fibres exposées par enlèvement de la gaine rigide du câble dans un conduit flexible (14) d'une deuxième rigidité, la deuxième rigidité étant plus petite que la première rigidité ;
fixer (104) le câble à fibre optique au conduit flexible au moyen d'un premier connecteur (15), et fixer (108) le conduit flexible à un presse-étoupe du boîtier de fermeture (6) au moyen d'un deuxième connecteur (16) ;
**caractérisé en ce que** conformément au procédé, le premier connecteur (15) permet ladite fixation du câble (3) au conduit (14), dans lequel le conduit est un conduit ondulé, de manière à permettre une rotation axiale du conduit par rapport au câble.

2. Procédé selon la revendication 1, dans lequel le deuxième connecteur (16) est agencé pour permettre ladite fixation du conduit (14) au presse-étoupe (10) de manière à permettre une rotation axiale du conduit par rapport au presse-étoupe.

3. Procédé selon l'une quelconque des revendications précédentes, dans lequel le conduit flexible (14) est un conduit ondulé comprenant une pluralité de premier et deuxième sections de conduit disposées en alternance d'un premier et d'un deuxième diamètre respectivement, le premier diamètre étant inférieur au deuxième diamètre, et dans lequel au moins l'un parmi le premier et deuxième connecteurs comprend une partie formant connecteur de conduit (29) ayant un diamètre interne d'au moins le deuxième diamètre, une surface interne de la partie formant connecteur de conduit comprenant au moins une bague d'étanchéité (35) ayant un diamètre de bague intérieure supérieur ou égal au premier diamètre et inférieur au deuxième diamètre.

4. Procédé selon l'une quelconque des revendications précédentes, dans lequel au moins l'un parmi le premier et le deuxième connecteur (15, 16) comprennent une partie formant connecteur de conduit (29), la partie formant connecteur de conduit comprenant une section fixe (30) et une section de volet (31), la section de volet pouvant être articulée sur la section fixe, dans lequel ledit au moins un premier et un deuxième connecteurs sont fixés au conduit (14) en introduisant le conduit dans la section fixe et en fermant et en verrouillant le volet par rapport à la section fixe.

5. Procédé selon l'une quelconque des revendications précédentes, dans lequel la longueur de câble en excès est stockée dans une cage de gestion de câbles.

6. Connecteur pour la fixation d'un conduit flexible ondulé sur un câble à fibre optique, le connecteur étant agencé pour recevoir le conduit flexible ondulé (14), le conduit ondulé comprenant une pluralité de première et deuxième sections de conduit agencées en alternance d'un premier et d'un deuxième diamètre respectivement, le premier diamètre étant inférieur au deuxième diamètre, et dans lequel le connecteur comprend :
une partie formant connecteur de conduit (29) permettant la fixation du connecteur sur le conduit flexible, et une autre partie formant connecteur (28, 50) ; dans lequel le connecteur convient pour connecter un câble à fibre optique rigide à un conduit flexible ou pour connecter un conduit flexible à un presse-étoupe d'un boîtier de fermeture, pour une utilisation dans un procédé selon l'une quelconque des revendications 1 à 5,
dans lequel l'autre partie formant connecteur comprend :
une partie formant connecteur de câble (28) pour recevoir une gaine de câble du câble à fibre optique et comprenant des moyens de serrage (46, 47) pour fixer le connecteur au câble,
dans lequel la partie formant connecteur de conduit (29) comprend un diamètre intérieur d'au moins le deuxième diamètre, une surface interne de la partie formant connecteur de conduit comprenant au moins une bague d'étanchéité (35) ayant un diamètre de bague interne supérieur ou égal au premier diamètre et inférieur au deuxième diamètre pour permettre une rotation axiale du conduit par rapport au connecteur, dans lequel la partie formant connecteur de conduit (29) comprend une section fixe et une section de volet, la section de volet étant articulée par rapport à la section fixe, dans lequel une première partie de la bague d'étanchéité est disposée sur la section de volet et au moins une deuxième partie de la bague d'étanchéité (35) est disposée sur la section fixe.

7. Connecteur pour la fixation d'un conduit flexible ondulé sur le presse-étoupe d'un boîtier de fermeture, le connecteur étant agencé pour recevoir le conduit flexible ondulé (14), le conduit ondulé (14) étant un conduit ondulé comportant une pluralité de premières et de deuxièmes sections de conduit disposées en alternance d'un premier et d'un deuxième diamètre respectivement, le premier diamètre étant inférieur au deuxième diamètre, et dans lequel le connecteur comprend :
une partie formant connecteur de conduit (29) permettant la fixation du connecteur au conduit flexible, et une autre partie formant connecteur (28, 50) ;
dans lequel le connecteur est adapté pour connecter un câble rigide à fibre optique à une gaine souple ou pour connecter une gaine souple à un presse-étoupe d'un boîtier de fermeture, pour une utilisation dans un procédé selon l'une quelconque des revendications 1 à 5,
dans lequel l'autre partie formant connecteur comprend :
une partie formant connecteur de presse-étoupe (50) pour permettre la fixation du connecteur à un presse-étoupe de connecteur de câble d'un boîtier de fermeture, dans lequel la partie formant connecteur de presse-étoupe (50) comprend une partie de réception en forme d'entonnoir pour recevoir une partie de presse-étoupe du presse-étoupe de connecteur de câble, la partie de réception en forme d'entonnoir étant formée de manière à être interposée en utilisation entre ladite partie de presse-étoupe et une autre partie de presse-étoupe, dans lequel la partie de réception en forme d'entonnoir comprend en outre une surface intérieure et une ou plusieurs dents de fixation (53) s'étendant depuis la surface intérieure, la ou les dents de fixation radiales correspondant à une ou plusieurs encoches ou fentes sur la partie presse-étoupe de manière à empêcher une rotation axiale entre le connecteur et la presse-étoupe lors de l'utilisation ; et
dans lequel la partie formant connecteur de conduit (29) comprend un diamètre interne d'au moins le deuxième diamètre, une surface interne de la partie formant connecteur de conduit comprenant au moins une bague d'étanchéité (35) ayant un diamètre de bague interne supérieur ou égal au premier diamètre et inférieur au deuxième diamètre pour permettre une rotation axiale du conduit par rapport au connecteur, dans lequel la partie formant connecteur de conduit (29) comprend une section fixe et une section de volet, la section de volet pouvant être articulée par rapport à la section fixe, dans lequel une première partie de la bague d'étanchéité est agencée sur la section de volet et au moins une deuxième partie de la bague d'étanchéité (35) est disposée sur la section fixe.

8. Connecteur selon la revendication 6 ou 7, dans lequel la section fixe (30) et la section de volet (31) comprennent des moyens de verrouillage mutuellement correspondants pour verrouiller la section de volet sur la section fixe dans une position fermée de la section de volet.

9. Connecteur selon l'une quelconque des revendications 6 à 8, dans lequel la section de de volet (31) est relié de manière articulée à la section fixe (30) au moyen d'au moins une charnière en matériau souple.

10. Connecteur selon l'une quelconque des revendications 6 à 9, dans lequel le connecteur est un élément intégral formé d'un même matériau.

11. Ensemble comprenant un conduit flexible (14), un premier connecteur (15) et un deuxième connecteur (16), dans lequel le conduit flexible est un conduit ondulé comprenant une pluralité de premier et deuxième sections de conduit disposés en alternance d'un premier et d'un deuxième diamètre respectivement, le premier diamètre étant inférieur au deuxième diamètre, dans lequel le premier connecteur (15) comprend un connecteur selon l'une quelconque des revendications 6 à 8 pour connecter un câble à fibre optique rigide au conduit flexible (14), et dans lequel le deuxième connecteur (16) comprend un connecteur selon l'une quelconque des revendications 6 à 10 pour connecter le conduit flexible (14) à un presse-étoupe, le conduit flexible étant fixé avec une première extrémité de celui-ci au premier connecteur et avec la deuxième extrémité de celui-ci au deuxième connecteur.

12. Utilisation d'un connecteur selon l'une quelconque des revendications 6 à 10 ou d'un ensemble selon la revendication 11 dans un procédé de connexion d'un câble à fibre optique (3) à un boîtier de fermeture (6).
